Europäisches Patentamt

European Patent Office

Office européen des brevets

(19)

(11) Publication number: **0 071 831**
**B1**

# (12) EUROPEAN PATENT SPECIFICATION

(45) Date of publication of patent specification: **26.02.86**

(21) Application number: **82106620.6**

(22) Date of filing: **22.07.82**

(51) Int. Cl.⁴: **F 16 K 31/18,** F 16 K 1/30,
F 17 C 5/02

(54) Filler valve for a fluid tank.

(30) Priority: **24.07.81 GB 8122853**

(43) Date of publication of application:
**16.02.83 Bulletin 83/07**

(45) Publication of the grant of the patent:
**26.02.86 Bulletin 86/09**

(84) Designated Contracting States:
**AT BE CH DE FR GB IT LI LU NL SE**

(56) References cited:
EP-A-0 023 072
BE-A- 871 180
DE-B-1 964 366
FR-A-1 327 130
US-A-2 616 450
US-A-4 064 907

(73) Proprietor: **SPERRYN & COMPANY LIMITED**
**1 Kingsway**
**London WC2B 6XF (GB)**

(72) Inventor: **De Voogd, Adrianus**
**de Roolaan 33**
**NL-3273 AD West Maas (NL)**

(74) Representative: **Lewis, Samuel Hewitt et al**
**FORRESTER & BOEHMERT Widenmayerstrasse**
**4/I**
**D-8000 München 22 (DE)**

Courier Press, Leamington Spa, England.

## Description

This invention relates to a filler valve for a fluid tank and more particularly to a filler valve for a liquidified gas tank, such as a tank for liquified petroleum gas.

Such gas tanks should not be filled to more than 80% full to allow for expansion of the gas in the event of temperature increases.

Such gas tanks usually have a safety valve so that in the event of the tank being filled too full, if the pressure in the tank increases due to expanding gas above a threshold pressure, gas is released from the tank thereby reducing the pressure.

It will be appreciated that if the gas is released into a closed space, such as a building, an explosive mixture could be formed with the air in the building. It is therefore preferable to provide a filler valve that does not permit the tank to be filled more than 80% full.

Filler valves have been proposed, in for example, U.S. Patent Specification No. 4064907, which close off the gas supply to the tank, when the tank is filled a predetermined amount, e.g. 80% of capacity.

In this specification, a valve is disclosed in which the amount of liquid gas in the tank is sensed by a float, which rotates a cam member about an axis transverse to and intersecting with a horizontal axis along which a valve member of the valve moves. When the float has risen a preset amount, to sense that the gas level in the tank has reached a predetermined amount, a spring loaded roller which bears on the cam is received in a recess in the cam and thus a valve member can move into engagement with a valve seat and, as a result, the gas flow into the tank is stemmed.

The pressure which the roller imposes upon the cam, is dependent upon the pressure of gas flowing through the valve. It will be appreciated that as pressures involved in handling liquified gas are very high, up to ten bars, that the force of the roller imposes on the cam is very high.

Such prior proposals have not worked well because the pressure imposed on the cam by the ball is sufficient to prevent the cam from being freely rotated by the float, which float is thus prevented from rising as the gas level in the tank rises. The problem is accentuated because of the low density of the liquified gas, which imparts only a small upthrust on the float.

Accordingly it is an object of the present invention to provide a new or improved filler valve for a fluid tank.

According to a first aspect of the invention we provide a filler valve for a fluid tank comprising a valve body having an inlet and an outlet and a passage therebetween to provide a fluid flow path from the inlet through the passage to the outlet from where the gas may pass into a tank, a shut-off valve in the passage, the shut-off valve comprising a valve member engageable with two valve seats, resilient biasing means biasing said valve member into engagement with a first of said valve seats, the pressure of fluid flowing in the passage acting, against the force of the resilient biasing means, to move the valve member away from the seat, movement of the valve member away from the first valve seat being controlled by fluid level sensing means, the fluid level sensing means comprising a float which, in accordance with the level of fluid in the tank, rises and rotates a cam member about a cam axis, a part of the valve member bearing on the cam, whereby when the fluid level is below a predetermined level, movement of the valve member into engagement with the second of the valve seats is prevented, and when the fluid level is at or above said predetermined level, said part of the valve member engages a part of the cam to thereby permit the valve member to be moved further away from the first valve seat by the pressure of fluid in the passage and into engagement with the second valve seat, to thereby stem the flow of fluid passing through the outlet into the tank, the cam axis lying in a plane which is parallel to but spaced above a plane containing the axis of movement of the valve member.

It has been found that even with very high fluid pressures such as are encountered in handling liquified gas, that in a valve in accordance with this aspect of the invention the cam is not prevented from rotating as the tank is filled. Since the plane containing the cam axis is above the plane containing the axis of movement of the valve member, the bore of the valve member bearing on the cam will tend to rotate the cam in a manner to raise the float to assist operation of the valve.

According to a second aspect of the invention we provide a filler valve for a fluid tank comprising a valve body having an inlet and an outlet and a passage therebetween to provide a fluid flow path from the inlet through the passage to the outlet from where the gas may pass into a tank, a shut-off valve in the passage, the shut-off valve comprising a valve member engageable with two valve seats, resilient biasing means biasing said valve member into engagement with a first of said valve seats, the pressure of fluid flowing in the passage acting against the force of the resilient biasing means to move the valve member away from the seat, movement of the valve member away from the valve seat being controlled by fluid level sensing means, the fluid level sensing means comprising a float which, in accordance with the level of fluid in the tank, rises and rotates a cam member about a cam axis, a part of the valve member bearing on the cam, whereby when the fluid level is below a predetermined level, movement of the valve member into engagement with the second of the valve seats, is prevented, and when the fluid is at or above said predetermined level said part of the valve member engages a part of the cam to thereby permit the valve member to be moved further away from the first valve seat by the pressure of fluid in the passage and into engagement with the second valve seat, to thereby stem the flow of fluid passing through the outlet into the tank, duct means being provided to permit fluid to pass from the passage to the part of the valve member which bears on the cam, to lubricate the bearing surfaces.

Preferably the duct means comprises a duct which extends from the passage through the valve member to said part thereof which engages the cam.

As the bearing surfaces are lubricated, it has been found again that even with very high fluid pressures such as are encountered in handling liquified gas, the cam is not prevented from rotating as the tank is filled.

It will be appreciated that in each case, the valve member will be maintained in engagement with the second valve seat by the pressure of fluid in the passage.

If desired, in a valve according to the second aspect of the invention, the cam axis may be in a plane parallel to but spaced above a plane containing the axis of movement of the valve member.

Preferably, a second shut-off valve is provided in the passage between the inlet and the valve member which second shut-off valve is resiliently biased into engagement with a third valve seat against the pressure of fluid flowing in the passage, and is movable away from the third valve seat by the pressure of fluid to permit the fluid to flow past the second shut-off valve.

The second shut-off valve may therefore not re-engage the third valve seat until the pressure of fluid at the inlet end of the passage is reduced, i.e. when fluid is no longer being fed to the inlet.

The float of the fluid sensing means may comprise a hollow container mounted on a float arm, the arm having at the end remote from the float, a cam with an aperture therein, the aperture having a shaft extending therethrough, the ends of the shaft engaging with the body of the valve to mount the fluid level sensing means on the valve body.

The valve body may include means to mount the valve in an aperture in a wall of the tank, whereby fluid may be fed from the exterior of the tank into said inlet. The outlet may comprise two ports which extend transversely of the passage.

The valve member may comprise a washer having resilient means to improve said sealing engagement with the first and second valve seats, and said second shut-off valve may also include resilient means to improve said sealing engagement with the third seat.

Preferably, vent means are provided to permit pressurised fluid trapped between said valve member when said valve member is engaged with the second valve seat, and the second shut-off valve, when closed, to escape into the tank.

In the fluid filler valve according to the second and third aspects of the invention, said vent means may conveniently be provided by said duct means.

The valve described is particularly applicable to filler valves for liquified gas tanks such as are provided on motor vehicles for containing liquified petroleum gas such as propane, although other applications are envisaged.

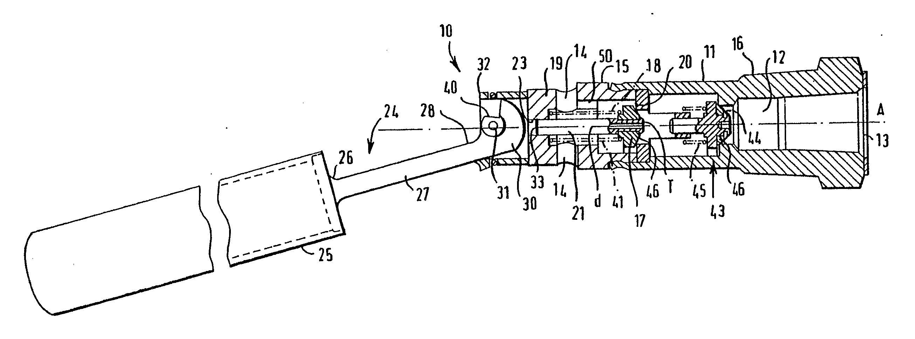

The invention will now be described with the aid of the accompanying drawing which is a side section of a valve according to the invention.

Referring to the drawing, there is shown a filler valve 10 for use in filling a tank with liquified petroleum gas or other liquified gas.

The valve 10 comprises a body 11 in which there is a passage 12 which extends from an inlet 13, to an outlet comprising a pair of transversely extending outlet ports 14 which communicate with the passage 12.

In use, liquified gas may be fed to the inlet 13 and flow from the inlet 13 to the outlet ports 14, through the passage 12.

The body 10 is conveniently made in two parts 15, 16 which are screwed together, the part 16 in which the inlet 13 is provided, being adapted to be received in an aperture in the side wall of a tank.

In the passage 12, there is provided a first shut-off valve comprising a valve member 17 which is resiliently biased by a spring 18, which spring engages the valve member 17 at one end and a stop 19 of the body 11 at the other end, to the right as seen in the drawings. The member 17 thus engages a first valve seat 20 and blocks the passage 12. The valve member 17 also comprises a valve stem 21 which is received in a bore 23 in the stop 19 and passes through the spring 18.

When liquified gas under pressure is flowing from the inlet 13 through the valve 10, the valve member 17 will be moved against the force of the spring 18 to the left to permit the gas to flow past the valve member 17, to the outlet ports 14 and hence into the tank. However, the valve member 17 is restrained from moving further to the left by fluid level sensing means 24.

The fluid level sensing means 24 comprise a float 25 which is a hollow container, which float is received on one end 26 of a float arm 27, the other end 28 of the arm 27 having attached thereto a cam 30 which is journalled on a shaft 31. The ends of the shaft 31 are received in bores in the body 11, either side of a housing 32 in which the cam 30 is received.

As the valve member 17 is moved to the left as seen in the drawing by the gas pressure, the free end 33 of the stem 21 received in the bore 23 of the stop 19, will extend from the bore 23 and engage the cam 30.

As the liquid level in a tank rises, the float 25 will correspondingly rise and thus the cam 30 will be rotated, the end 33 of the valve stem 21 bearing on the cam 30 as it rotates.

It can be seen that the axis of the shaft 31 on which the cam 30 is journalled, lies in a plane a small distance above a parallel plane containing the axis A of movement of the valve member 17. The high pressure of the liquified gas is transmitted through the stem 21 to the end 33 which bears on the cam 30. However, as the cam axis is spaced from the axis A, the cam 30 will be free to rotate. Further, as the cam axis is above axis A, the valve stem 21 will tend to rotate the cam 30 in a clockwise direction and thereby reduce the leverage imposed by the mass of the float 25 and arm 27, as the tank fills.

It can be seen that the cam 30 has a cut-out part 40. As the float 25 rises an amount corresponding to a threshold level of liquified gas in the tank, for example when the tank is 80% filled, the end 33 of the valve stem 21 will lie adjacent the cut-out 40 and thus the valve member 17 will be free to move further to the left under the influence of pressure of the flowing gas, the end 33 of the stem 21 moving into the cut-out part 40.

The valve member 17 will thus move to the left into sealing engagement with a second valve seat 41 and thus the flow of gas through the passage 12 will be stemmed.

The valve member 17 will be retained in engagement with the seat 41 by the pressure of gas in the passage 12, to the right of the valve member 17.

Thus the valve 10 will permit liquified gas to pass into the tank until the threshold level is reached, and then the flow through the valve will be stemmed.

Also received in the passage 12 is a further shut-off valve 43 which is normally biased into engagement with a third valve seat 44 by a further spring 45. Both the valve member 17 which comprises a washer, and the shut-off valve 43 have resilient sealing means 46 to improve the sealing engagement with the respective valve seats.

When the liquified gas is fed to the inlet 11, the pressure thereof will move the shut-off valve 43 from the seat 44 to the left, against the force of the spring 45, to allow the liquified gas to pass from the inlet 13 and impinge upon the valve member 17. Thus even where the valve member 17 is engaged with the second valve seat 41, stemming the flow of fluid through the valve, the pressure at the inlet 13 will maintain the shut-off valve 43 open.

When the tank is filled to the required level, and the valve 10 has shut-off the liquid gas flow, the flow of gas fed to the inlet 13 will be stopped, for example by removing a feeder hose or other means engaged with the inlet 13 from the inlet, and the shut-off valve 43 will be returned to its closed position as shown, by spring 45.

Any pressurised liquified gas trapped in the passage 12 between the valve member 17 and the shut-off valve 43 may escape via a venting means 50 into one of the outlet ports 14 and hence into the tank.

As the pressure in the passageway 12 decreases, the spring 18 will again move the valve member 17 to the right into sealing engagement with the first valve seat 20 and thus the end 33 of the valve stem 21 will disengage the cut-out part 40 of the cam 30 and thus permit the float 25 to fall as the gas level in the tank falls.

The valve member 17 also has a duct *d* which extends through the valve stem 21 from the tip T of the valve member 17 to the end 33 of the stem 21.

This duct *d* has two important functions. First, liquified gas may pass from the passage 12 between the valve member 17 and inlet 13 into the duct *d* and hence to the end 33 bearing on the cam 30. This liquified gas acts as a lubricant as the cam 30 rotates thereby further reducing the tendency of the stem 21 to prevent the cam 30 rotating as the tank fills, due to the high bearing pressure of the end 33 on the cam 30.

Secondly, the duct *d* acts in the same manner as the vent means 50 to relieve pressure between the valve member 17 when engaged with the second valve seat 41, and the closed shut-off valve 43.

Although the valve described has both a duct *d* to lubricate the bearing surfaces, and the cam axis is spaced from the axis of movement A of the valve member 17 to permit the cam 30 to be freely rotated, if desired a valve may have only one of these features, although preferably the valve has both features.

To adjust the threshold level at which the end 33 engages the cut-out 40 of cam 30, the float arm 27 may be adjusted in length or bent as appropriate.

Although a filler valve specifically for use in feeding liquified gas into a tank have been described, such as valves used in tanks on motor vehicles in which liquid petroleum gas such as propane is stored, have been described, a valve in accordance with the invention has many other applications wherein fluid under pressure is fed into a tank and it is desired to regulate the amount to which the tank may be filled.

**Claims**

1. A filler valve (10) for a fluid tank, the valve comprising a valve body (11) having an inlet (13) and an outlet (14) and a passage (12) therebetween to provide a fluid flow path from the inlet through the passage (12) to the outlet from where the fluid may pass into a tank, a shut-off valve in the passage (12), the shut-off valve comprising a valve member (17) engageable with two valve seats (20, 41), resilient biasing means (18) biasing said valve member (17) into engagement with a first (20) of said valve seats, the pressure of fluid flowing in the passage (12) acting, against the force of the resilient biasing means (18), to move the valve member (17) away from the seat (10), movement of the valve member (17) away from the first valve seat (10) being controlled by fluid level sensing means (24), the fluid level sensing means (24) comprising a float (25) which, in accordance with the level of fluid in the tank, rises and rotates a cam (30) about a cam axis (31), a part (33) of the valve member (17) bearing on the cam (30), whereby when the fluid level is below a predetermined level, movement of the valve member (17) into engagement with the second (41) of the valve seats is prevented, and when the fluid level is at or above said predetermined level, said part (33) of the valve member (17) engages a part (40) of the cam (30) to thereby permit the valve member (17) to be moved further away from the first valve seat (20) by the pressure of the fluid in the passage (12) and into engagement with the second valve seat, to stem the flow of fluid passing through the outlet (14) into the tank characterised in that the cam axis (31) lies in a plane parallel to but spaced above a plane containing the axis of movement (A) of the valve member (17).

2. A filler valve (10) for a fluid tank, valve comprising a valve body (11) having an inlet (13) and an outlet (14) and a passage (12) therbetween to provide a fluid flow path from the inlet through the passage (12) to the outlet from where the fluid may pass into a tank, a shut-off valve in the passage (12), the shut-off valve comprising a valve member (17) engageable with two valve seats, (20, 41) resilient biasing means (18) biasing said valve member (17) into engagement with a first (20) of said valve seats, the pressure of fluid flowing in the passage (12) acting, against the force of the resilient biasing means (18), to move the valve member (17) away from the seat (10), movement of the valve member (17) away from the valve seat (10) being controlled by fluid level sensing means (24), the fluid level sensing means (24) comprising a float (25) which, in accordance with the level of fluid in the tank, rises and rotates a cam (30) about a cam axis (31), a part (33) of the valve member (17) bearing on the cam (30), whereby when the fluid level is below a predetermined level, movement of the valve member (17) into engagement with the second (41) of the valve seats, is prevented, and when the fluid level is at or above said predetermined level, said part (33) of the valve member (17) engages a part (40) of the cam (30) to thereby permit the valve member (17) to be moved further away from the first valve seat (20) by the pressure of fluid in the passage (12) and into engagement with the second valve seat, to thereby stem flow of fluid passing through the outlet (14) into the tank, characterised in that duct means (d) are provided to permit fluid to pass from the passage (12) to the part (33) of the valve member (17) which bears on the cam (30) to lubricate the bearing surfaces (30, 33).

3. A valve according to Claim 2 wherein the duct means (d) comprises a duct (d) which extends from the passage (12) through the valve member (17) to said part (33) thereof which engages the cam (33).

4. A valve according to Claim 2 or Claim 3 wherein the cam axis (31) lies in a plane parallel to but spaced above a plane containing the axis of movement (A) of the valve member (17).

5. A valve according to any one of the preceding Claims wherein a second shut-off valve (43) is provided in the passage (12) between the inlet (13) and the valve member (17) which second shut-off valve (43) is resiliently biased into engagement with a third valve seat (44) against the pressure of fluid flowing in the passage (12), and is movable away from the third valve seat (44) by the pressure of fluid to permit the fluid to flow past the second shut-off valve (43).

6. A valve according to any one of the preceding Claims wherein the float (25) of the fluid sensing means (24) comprises a hollow container mounted on a float arm (27), the arm (27) having at the end remote from the float (25), a cam (30) with an aperture therein the aperture having a shaft (31) extending therethrough, the ends of the shaft engaging with the body of the valve (10) to mount the fluid level sensing means (24) on the valve body (11).

7. A valve according to any one of the preceding Claims wherein the filler valve body (11) includes means to mount the body (11) in an aperture in a wall of a tank, whereby fluid may be fed from the exterior of the tank into said inlet.

8. A valve according to any one of the preceding Claims wherein vent means are provided to permit pressurised fluid trapped between the valve member (17), when said valve member (17) is engaged with the second valve seat (41) and the second shut-off valve (43) when closed to escape into the tank.

9. A valve according to Claim 8 when appendant to Claim 2 wherein said vent means are provided by said duct means (d).

**Revendications**

1. Valve de remplissage (10) pour un réservoir de fluide, la valve comportant un coros de valve (11), qui présente une entrée (13) et une sortie (14) et un passage (12) entre elles pour fournir à un fluide un chemin d'écoulement pour passer de l'entrée, par le passage (12) vers la sortie d'où le fluide peut gagner un réservoir, un obturateur situé dans le passage (12) et comprenant un clapet (17) pouvant venir au contact de deux sièges de clapet (20, 41), des moyens de rappel élastiques (18) qui poussent le clapet (17) à venir en contact avec un premier (20) des sièges de clapet, la pression du fluide s'écoulant dans le passage (12) agissant contre la force des moyens de rappel élastiques (18) pour éloigner le clapet (17) du siège (20), tandis que le mouvement du clapet (17) s'éloignant du premier siège de clapet (20) est déterminé par des moyens (24) de détection du niveau du fluide qui comportent un flotteur (25) qui, en fonction du niveau du fluide dans le réservoir, monte et fait tourner une came (30) autour d'un axe (31) de came, une partie (33) du clapet (17) s'appuyant sur la came (30); de façon que, quand le niveau du fluide est inférieur à un niveau prédéterminé, le mouvement du clapet (17) pour venir en contact avec le second (41) des sièges de clapet soit empêché et, quand le niveau du fluide est égal ou supérieur à ce niveau prédéterminé, la partie (33) du clapet (17) vienne en contact avec une partie (40) de la came (30) pour permettre ainsi au clapet (17) de continuer à s'écarter du premier siège de clapet (20) sous l'action de la pression du fluide régnant dans le passage (12) et de venir en contact avec le second siège de clapet, pour arrêter l'écoulement du fluide passant à travers la sortie (14) pour aller dans le réservoir, caractérisée en ce que l'axe (31) de la came est dans un plan parallèle à un plan contenant l'axe du mouvement (A) du clapet (17), mais situé à une certaine distance au-dessus de ce plan.

2. Valve de remplissage (10) pour un réservoir de fluide, la valve comportant un corps de valve (11), qui présente une entrée (13) et une sortie (14) et un passage (12) entre elles pour fournir à un fluide un chemin d'écoulement pour passer de l'entrée, par le passage (12) vers la sortie d'où le fluide peut gagner un réservoir, un obturateur situé dans le passage (12) et comprenant un clapet (17) pouvant venir au contact de deux sièges de clapet (20, 41), des moyens de rappel élastiques (18) qui poussent le clapet (17) à venir en contact avec un premier (20) des sièges de clapet, la pression du fluide s'écoulant dans le passage (12) agissant contre la force des moyens de rappel élastiques (18) pour éloigner le clapet (17) du siège (20), tandis que le mouvement du clapet (17) s'éloignant du premier siège de clapet (20) est déterminé par des moyens (24) de détection du niveau du fluide qui comportent un flotteur (25) qui, en fonction du niveau du fluide dans le réservoir, monte et fait tourner une came (30) autour d'un axe (31) de came, une partie (33) du clapet (17) s'appuyant sur la came (30); de façon que, quand le niveau du fluide est inférieur à un niveau prédéterminé, le mouvement du clapet (17) pour venir en contact avec le second (41) des sièges de clapet soit empêché et, quand le niveau du fluide est égal ou supérieur à ce niveau prédéterminé, la partie (33) du clapet (17) vienne en contact avec une partie (40) de la came (30) pour permettre ainsi au clapet (17) de continuer à s'écarter du premier siège de clapet (20) sous l'action de la pression du fluide régnant dans le passage (12) et de venir en contact avec le second siège de clapet, pour arrêter de ce fait l'écoulement du fluide passant à travers la sortie (14) pour aller dans le réservoir, caractérisée en ce qu'il est prévu des moyens du type conduit (d) pour permettre au fluide de passer du passage (12) à la partie (33) du clapet (17) qui s'appuie sur la came (30) pour lubrifier les surfaces d'appui (30, 33).

3. Valve selon la revendication 2, dans laquelle les moyens du genre conduit (d) comprennent un conduit (d) qui s'étend depuis le passage (12), à travers le clapet (17), jusqu'à la partie (33) de ce clapet qui est au contact de la came (30).

4. Valve selon la revendication 2 ou la revendication 3 dans laquelle l'axe (31) de la came est dans un plan parallèle à un plan contenant l'axe du mouvement (A) du clapet (17), mais à une certaine distance au-dessus de ce plan.

5. Valve selon l'une quelconque des revendications précédentes, dans laquelle il est prévu dans le passage (12) entre l'entrée (13) et le clapet (17), un second obturateur (43) qui est élastiquement poussé au contact d'un troisième siège de clapet (44), à l'encontre de la pression du fluide s'écoulant dans le passage (12), et peut s'écarter du troisième siège de clapet (44) sous l'action de la pression du fluide pour permettre au fluide de s'écouler au-delà du second obturateur (43).

6. Valve selon l'une quelconque des revendications précédentes, dans laquelle le flotteur (25) des moyens (24) de détection du fluide comporte un récipient creux monté sur un bras (27) de flotteur, le bras (27) présentant, à son extrémité éloignée du flotteur (25) une came (30) présentant une ouverture traversée par un arbre (31) dont les extrémités sont en prise avec le corps de la valve (10) pour le montage des moyens (24) de détection du niveau du fluide sur le corps de valve (11).

7. Robinet selon l'une quelconque des revendications précédentes, dans laquelle le corps (11) de la valve de remplissage inclut des moyens pour monter le corps (11) dans une ouverture d'une paroi d'un réservoir, de sorte qu'on peut amener du fluide de l'extérieur du réservoir dans ladite entrée.

8. Valve selon l'une quelconque des revendications précédentes, dans laquelle des évents sont prévus pour permettre au fluide sous pression piégé entre le clapet (17), lorsque ce clapet (17) est au contact du second siège de clapet (41), et le second obturateur (43) lorsqu'il est fermé, de s'échapper dans le réservoir.

9. Valve selon la revendication 8 lorsqu'elle dépend de la revendication 2, dans laquelle les évents sont réalisés par lesdits moyens du type conduit (d).

**Patentansprüche**

1. Füllventil (10) für einen Fluidtank, wobei das Ventil einen Ventilkörper (11) mit einem Einlaß (13) aufweist, und einen Auslaß (14) und eine Leitung (12) zwischen diesen, um einen Fluidströmungsweg von dem Einlaß durch die Leitung (12) zu dem Auslaß zu ergeben, von wo das Fluid dann in einen Tank einströmen kann, weiter mit einem Absperrventil in der Leitung (12), wobei das Absperrventil ein Ventilelement (17) aufweist, das mit zwei Ventilsitzen (20, 41) zusammenwirken kann, nachgiebige Spannelemente (18), die das Ventilelement (17) in Zusammenwirkung mit einem ersten (20) der Ventilsitze bringen, wobei der Druck des Fluids, das in die Leitung (12) strömt, wirkt, entgegen der Kraft der nachgiebigen Spannelemente (18), um das Ventilelement (17) von dem Sitz (10) wegzubewegen, wobei die Bewegung des Ventilelements (17) von dem ersten Ventilsitz (10) weggesteuert wird durch Fluidniveauerfassungselemente (24), diese Fluidniveauerfassungselemente (24) weisen dabei einen Schwimmer (25) auf, der, in Übereinstimmung mit dem Fluidniveau in dem Tank, aufsteigt und einen Nocken (30) um eine Nockenachse (31) dreht, ein Teil (33) des Ventilelementes (17) stößt gegen den Nocken (30), wodurch dann, wenn das Fluidniveau sich unterhalb eines vorbestimmten Niveaus befindet, eine Bewegung des Ventilelementes (17) in Zusammenwirkung mit dem zweiten (41) der Ventilsitze verhindert wird, und dann, wenn das Fluidniveau sich an oder überhalb einem bestimmten Niveau befindet, der Teil (33) des Ventilelementes (17) mit einem Teil (40) des Nockens (30) zusammenwirkt, um es dadurch dem Ventilelement (17) zu erlauben, weiter von dem ersten Ventilsitz (20) wegbewegt zu werden, durch einen Fluiddruck in der Leitung (12), und in Zusammenwirkung mit dem zweiten Ventilsitz, um die Fluidströmung, die durch den Auslaß (14) in den Tank strömt, aufzuhalten, dadurch gekennzeichnet, daß die Nockenachse (31) in einer Ebene parallel zu aber beabstandet von einer oberen Ebene liegt, die die Bewegungsachse (A) des Ventilelements (17) enthält.

2. Füllventil (10) für einen Fluidtank, das einen Ventilkörper (11) aufweist mit einem Einlaß (13) und einem Auslaß (14) und eine Leitung (12) zwischen diesen, um einen Fluidströmungsweg von dem Einlaß durch die Leitung (12) zu dem Auslaß zu ergeben, von wo das Fluid dann in einen Tank eintreten kann, weiter aufweisend ein Absperrventil in der Leitung (12), wobei das Absperrventil ein Ventilelement (17) aufweist, das mit zwei Ventilsitzen (20, 41), in Zusammenwirkung bringbar ist, nachgiebige Spannelemente (18), die das Ventilelement (17) in Zusammennen, während der Druck des Fluids, das in der nen, während der Druck des Fluids, das in der Leitung (12) strömt, wirkt, entgegen der Kraft der nachgiebigen Spannelemente (18), um das Ventilelement (17) von dem Sitz (10) wegzubewegen, wobei eine Bewegung des Ventilelements (17) von dem Ventilsitz (10) weg über Fluidniveauerfassungsmittel (14) gesteuert wird, und diese Fluidniveauerfassungsmittel (24) einen Schwimmer (25) aufweisen, der, in Übereinstimmung mit dem Fluidniveau in dem Tank, aufsteigt und einen Nocken (30) um eine Nockenachse (31) dreht, während ein Teil (33) des Ventilelements (17) an den Nocken (30) anstößt, wodurch dann, wenn das Fluidniveau sich unterhalb eines vorbestimmten Niveaus befindet, eine Bewegung des Ventilelements (17) in Zusammenwirkung mit dem zweiten (41) der Ventilsitze verhindert ist, und dann, wenn das Fluidniveau sich in oder überhalb einem vorbestimmten Niveau befindet, das Teil (33) des Ventilelements (17) mit einem Teil (40) des Nockens (30) zusammenwirkt, um dadurch dem Ventilelement (17) zu erlauben, weiter von dem ersten Ventilsitz (20) wegbewegt zu werden, durch einen Fluiddruck in der Leitung (12), und in Zusammenwirkung mit dem zweiten Ventilsitz, um dadurch die Fluidströmung, die durch den Auslaß (14) geht, in den Tank aufzuhalten, dadurch gekennzeichnet, daß Leitungsmittel (d) vorgesehen sind, um es dem Fluid zu erlauben, in die Leitung (12) zu strömen zu dem Teil (33) des Ventilelementes (17), welches an den Nocken (30) anstößt, um die Anstoßflächen (30, 33) zu benetzen.

3. Ventil nach Anspruch 2, wobei die Leitungsmittel (d) eine Leitung (d) aufweisen, die sich von der Leitung (12) durch das Ventilelement (17) zu dessen Teil (33) erstreckt, der mit dem Nocken (33) zusammenwirkt.

4. Ventil nach Anspruch 2 oder 3, wobei die Nockenachse (31) in einer Ebene parallel zu jedoch beabstandet oberhalb einer Ebene liegt, die die Bewegungsachse (A) des Ventilelements (17) enthält.

5. Ventil nach einem der vorstehenden Ansprüche, wobei ein zweites Abschaltventil (43) in der Leitung (12) zwischen dem Einlaß (13) und dem Ventilelement (17) vorgesehen ist, welches zweite Absperrventile (43) nachgiebig in Zusammenwirkung gespannt ist mit einem dritten Ventilsitz (44), entgegen dem Druck des in der Leitung (12) strömenden Fluids, und bewegbar ist weg von dem dritten Ventilsitz (44) durch einen Fluiddruck, um es zu ermöglichen, daß das Fluid hinter das zweite Absperrventil (43) strömt.

6. Ventil nach einem der vorstehenden Ansprüche, wobei der Schwimmer (25) der Fluiderfassungselemente (24) ein hohlkörperartiges Behältnis aufweist, das an einem Schwimmerarm (27) angebracht ist, daß der Arm (27) an dem von dem Schwimmer (25) entfernten Ende einen Nocken (30) aufweist, mit einer Öffnung darin, und die Öffnung eine Welle (31) aufweist, die sich dadurch erstreckt, und daß die Enden der Welle mit dem Ventilkörper (10) zusammenwirken, um die Fluidniveauerfassungselemente (24) an dem Ventilkörper (11) anzubringen.

7. Ventil nach einem der vorstehenden Ansprüche, wobei der Füllventilkörper (11) Elemente aufweist, um den Körper (11) in einer Öffnung in einer Wand des Tankes anzubringen, wodurch das Fluid von außerhalb des Tankes in den Einlaß geleitet werden kann.

8. Ventil nach einem der vorstehenden Ansprüche, wobei Entlüftungselemente vorgesehen sind, um es zu erlauben, daß das unter Druck stehende Fluid zwischen dem Ventilelement (17), wenn das Ventilelement (17) mit dem zweiten Ventilsitz (41) zusammenwirkt, und dem zweiten Absperrventil (43) eingefangen wird, wenn dieses geschlossen ist, um in den Tank zu entweichen.

9. Ventil nach Anspruch 8, wenn dieser auf Anspruch 2 zurückbezogen ist, wobei die Entlüftungsmittel durch die Leitungsmittel (d) vorgesehen sind.